# EUROPÄISCHE PATENTANMELDUNG

(11) **EP 1 420 152 A2**
(43) Veröffentlichungstag der Anmeldung: **19.05.2004**
(21) Anmeldenummer: 03024272.1
(22) Anmeldetag: 23.10.2003
(51) Int. Cl.: F02C 6/12, F01D 17/16

(54) **Abgasturbolader**

(30) Priorität: 18.11.2002 DE 10253693
(71) Anmelder: BorgWarner Turbo Systems GmbH, 67292 Kirchheimbolanden (DE)
(72) Erfinder: Koch, Ralf, 67308 Rüssingen (DE); Löffler, Paul, 70199 Stuttgart (DE); Daudel, Helmut, 73614 Schorndorf (DE)
(74) Vertreter: Neunert, Peter Andreas

(57) **Zusammenfassung**

Die Erfindung betrifft einen Abgasturbolader für eine Brennkraftmaschine, mit mindestens einer abgasseitig der Brennkraftmaschine nachgeschaltet angeordneten Turbine, wobei die Turbine einen Strömungskanal mit zumindest einem radialen Strömungsquerschnitt aufweist, mit einem den radialen Strömungsquerschnitt begrenzenden Strömungsring, wobei zur veränderlichen Einstellung des radialen Strömungsquerschnitts in diesem Bereich ein veränderliches Leitgitter vorgesehen ist.

## Beschreibung

Die Erfindung betrifft einen Abgasturbolader für eine Brennkraftmaschine der im Oberbegriff des Patentanspruchs 1 genannten Art, also einen Abgasturbolader für eine Brennkraftmaschine, mit mindestens einer abgasseitig der Brennkraftmaschine nachgeschaltet angeordneten Turbine, wobei die Turbine einen Strömungskanal mit zumindest einem radialen Strömungsquerschnitt aufweist, mit einem den radialen Strömungsquerschnitt begrenzenden Strömungsring, wobei zur veränderlichen Einstellung des radialen Strömungsquerschnitts in diesem Bereich ein veränderliches Leitgitter vorgesehen ist.

Ein gattungsgemäßer Abgasturbolader ist beispielsweise in dem deutschen Patent DE 100 29 640 C2 beschrieben. Ein solcher Abgasturbolader wird nachfolgend auch als Turbolader mit variabler Turbinengeometrie (VTG-Turbolader) bezeichnet. Weitere Abgasturbolader mit variabler Turbinengeometrie sind in der DE 100 48 105 A1, der DE 43 30 487 C1 sowie der DE 196 15 237 C2 beschrieben.

Ein beispielsweise aus der DE 100 29 640 C2 bekannter VTG-Turbolader weist einen radialen und halbaxialen Zuströmkanal auf, der über einen radialen bzw. halbaxialen Strömungseintrittsquerschnitt in den das Turbinenrad enthaltenden Turbinenabschnitt mündet. Im Strömungseintrittsquerschnitt ist ein strömungsgünstig konturierter Strömungsring vorgesehen, der den Strömungseintrittsquerschnitt in geeigneter Weise begrenzt. Im radialen Strömungseintrittsquerschnitt ist ein Leitgitterring mit verstellbaren Leitschaufeln angeordnet, über die der radiale Strömungseintrittsquerschnitt bedarfsgemäß variierbar ist, so dass eine variable Turbinengeometrie bereitgestellt werden kann. Diese Leitschaufeln sind in Abhängigkeit des aktuellen Betriebszustandes der Brennkraftmaschine zwischen einer den freien Strömungseintrittsquerschnitt zum Turbinenrad reduzierenden Staustellung und einer den Strömungseintrittsquerschnitt erweiternden Öffnungsstellung verstellbar, wodurch der Abgasgegendruck im Leitungsstrang zwischen dem Zylinderauslass und der Abgasturbine manipuliert und so auf einem gewünschten Wert eingestellt werden kann. Über die Einstellung des Leitgitters kann ein Abgasgegendruck sowie auch die Art und Weise der Zuströmung des Abgases auf das Turbinenrad beeinflusst werden, wodurch die Leistung der Turbine und damit die Leistung des Verdichters bedarfsgemäß an den Betriebszustand der Brennkraftmaschine eingestellt werden können. Derartige Abgasturbinen können sowohl in der befeuerten Antriebsbetriebsweise zur Steigerung der Motorleistung wie auch im Motorbremsbetrieb zur Bereitstellung einer zusätzlichen Motorbremsleistung eingesetzt werden.

Im Motorbremsbetrieb wird das Leitgitter in eine Staustellung gebracht, um für eine gewünscht hohe Motorbremsleistung sowohl auf der Abgasseite als auch auf der Ladeluftseite ein hohes Druckniveau zu erzielen. Dies geschieht durch eine deutliche Reduzierung des Eintrittsquerschnitts. Die gewünscht hohe Bremsleistung kann jedoch nur dann erzielt werden, wenn innerhalb der Turbine eine dafür vorteilhafte Druckverteilung herrscht und das Abgas in einer vorgesehenen, genau bestimmbaren Weise die Turbine durchströmt.

Problematisch hierbei sind insbesondere Fehlluftströme zwischen dem Zuströmkanal der Turbine und der Abströmseite der Turbine, die durch Bauteile- und Fertigungstoleranzen, aber auch durch Verschleiß und wärmebedingte Spannungen innerhalb der Turbine auftreten können. Diese unerwünschten Fehlluftströme treten zum Beispiel bei zu großen Spalten auf, die sich im Bereich der Einspannung des radialen Leitgitters an den jeweiligen Stirnseiten der Leitschaufeln aufgrund thermischer und auch mechanischer Belastung ausbilden können. Diese Fehlluftströme können einen Solldruckverlauf innerhalb der Turbine stark beeinträchtigen, was sich negativ sowohl auf die Motorleistung in der befeuerten Antriebsbetriebsweise aber auch auf die Motorbremsleistung auswirken kann. Fehlluftströme können aber auch durch die konstruktiv bedingte Spalte entstehen, die für die Beweglichkeit der Leitschaufeln in einem der Strömungseintrittsquerschnitte erforderlich sind.

Das Problem unerwünschter Fehlluftströme ist insbesondere bei Nutzfahrzeugmotoren, die eine sehr hohe Motorbremsleistung aufbringen müssen, von besonderer Bedeutung. Dort ist insbesondere zur Vermeidung von Fehlluftströmen eine besonders passgenaue Lagerung des Leitgitters bei zugleich reduzierter thermischer und mechanischer Belastung anzustreben.

In der deutschen Patentschrift DE 100 29 640 C2 ist ein gattungsgemäßer Abgasturbolader beschrieben, bei dem die Position des Strömungsrings im Gehäuse des Turboladers veränderlich eingestellt werden kann. Der Strömungsring, der die Funktion hat, den radialen bzw. auch den halbaxialen Strömungseintrittsquerschnitt auf einen gewünschten Wert zu begrenzen, ist hier axial verschiebbar ausgebildet, wodurch eine gegebenenfalls vorhandene Leitschaufelspalte am radialen Leitgitter auf ein Mindestmaß reduziert werden kann.

Problematisch an der in der DE 100 29 640 C2 beschriebenen Lösung ist, dass zur Vermeidung bzw. Reduzierung von Fehlluftströmen stets der gesamte Strömungsring verschoben werden muss. Insbesondere bei Nutzfahrzeugen, bei denen eine sehr hohe Motorleistung benötigt wird und somit auch die Motoren eine entsprechende Größe aufweisen, ist dieser Strömungsring zur Begrenzung der radialen und halbaxialen Strömungseintrittsquerschnitte relativ groß ausgebildet. Der Spalt zwischen dem variablen Leitgitter und dem Strömungsring hingegen sollte möglichst klein sein, idealerweise im Bereich von einigen zehntel bis hundertstel Millimetern. In der Praxis ergibt sich damit das Problem, den relativ großen und damit auch massiven Strömungsring in axialer Richtung definiert auf einige zehntel bzw. hundertstel Millimeter genau zu verstellen. Eine solche präzise Verstellbarkeit ist in der Praxis nicht oder nur mit erheblichem Mehraufwand möglich. Hierzu müsste insbesondere eine sehr aufwendige Verstelleinrichtung bereitgestellt werden, deren Aufwand den Nutzen durch die zusätzliche Motorbremsleistung häufig nicht rechtfertigt.

Eine solche Anordnung funktioniert in befriedigender Weise auch nur dann, solange keine großen Temperaturschwankungen auftreten. Turbolader sind jedoch auf Grund des Durchströmens heißer Auspuffgase durch den Turbinenteil insbesondere bei sehr hohen Leistungen auch sehr starken Temperaturschwankungen ausgesetzt, so dass sich die Turbinenteile und benachbarte Teile auf bis zu 900° C erwärmen können. Diese häufigen und hohen Temperaturschwankungen zusammen mit den extrem hohen Drehzahlen des Turbinenrades und des Kompressorrades erzeugen extreme Belastungen für alle Komponenten des Abgasturboladers, welche in einer frühen Abnutzung und einem Funktionsausfall des Turboladers resultiert.

Insbesondere bei sehr großen Motorleistungen muss also mit einer aus der DE 100 29 640 C2 bekannten Anordnung ein Kompromiss getroffen werden, entweder einen relativ großen oder einen möglichst kleinen Spalt zwischen Leitgitter und Strömungsring in Kauf zu nehmen. In diesem Falle wäre jedoch der Nutzen einer axialen Verschiebbarkeit des Strömungsringes nicht mehr gegeben. Im anderen Falle würde aber der Strömungsring sowie auch die Stirnflächen der Leitschaufeln des Leitgitters einem so erheblichen Verschleiß ausgesetzt, dass die die Lebensdauer des Turbinenrades und damit die Wirtschaftlichkeit signifikant reduziert wären. Eine reduzierte Lebensdauer gilt es aber bei Abgasturboladern gerade soweit wie möglich zu reduzieren.

Ausgehend von dem genannten Stand der Technik liegt der vorliegenden Erfindung die Aufgabe zugrunde, einen Abgasturbolader mit variabler Turbinengeometrie weiter zu entwickeln, der einen verbesserten Wirkungsgrad aufweist.

Diese Aufgabe wird erfindungsgemäß durch einen Abgasturbolader mit den Merkmalen des Anspruchs 1 gelöst. Demgemäß ist ein gattungsgemäßer Abgasturbolader für eine Brennkraftmaschine vorgesehen, bei dem ein Ausgleichsring vorgesehen ist, der axial und in Richtung des Leitgitters verstellbar ausgebildet ist.

Eine weitere Aufgabe der Erfindung besteht darin, insbesondere im Motorbremsbetrieb die Motorbremsleistung bzw. auch in der befeuerten Antriebsbetriebsweise die Laderleistung zu verbessern.

Ferner ist es eine Aufgabe, den Spalt zwischen Leitgitter und Strömungsring insbesondere bei sehr großen Turboladergeometrien definiert einstellen zu können. Insbesondere soll dabei die Lebensdauer des Turboladers durch Minimierung des Verschleißes von Leitgitter und Strömungsring vergrößert werden.

Der vorliegenden Erfindung liegt die Erkenntnis zugrunde, dass zur definierten Einstellung des Spaltes zwischen Leitgitter und Strömungsring nicht der gesamte Strömungsring, der insbesondere bei Motoren mit großer Motorleistung sehr massiv ausgebildet ist, verändert werden muss. Vielmehr reicht es aus, wenn lediglich ein im Vergleich zum Strömungsring sehr viel kleinerer Ausgleichsring axial verschoben wird.

Im Unterschied zum Stand der Technik weist der Strömungsring zu diesem Zwecke erfindungsgemäß einen Ausgleichsring auf, der axial in Richtung des Leitgitters, d.h. in Richtung der Stirnseite der Leitschaufeln des Leitgitters, verschiebbar ausgebildet ist. Dadurch wird die Möglichkeit eröffnet, Spaltmaße, die konstruktiv bedingt sind oder durch Verschleiß, durch Wärmedehnung oder durch sonstige Ursachen entstehen können, über eine geringe axiale Bewegung des Ausgleichsrings weitestgehend zu reduzieren und gegebenenfalls völlig zu eliminieren. Somit können Fehlluftströme weitestgehend vermieden werden und innerhalb der Turbine kann eine gewünschte Druckverteilung eingestellt werden, die eine gewünschte Abgasströmung auf das Turbinenrad bewirkt.

Die Erfindung eignet sich insbesondere bei Abgasturbolader für Nutzfahrzeuge, bei denen der Abgasturbolader sehr groß ausgebildet ist und bei denen somit der Strömungsring relativ schwergewichtig ausgebildet sein muss. Während bei bekannten Lösungen sich der Strömungsring hier nur mit erheblichem Kraftaufwand verstellen lässt, ist der erfindungsgemäß bereitgestellte Ausgleichsring bereits mit relativ geringen Kräften axial verstellbar.

Die Erfindung sei jedoch nicht ausschließlich auf sehr groß dimensionierte Abgasturbolader bei Nutzfahrzeugen beschränkt, sondern lässt sich selbstverständlich auch bei Abgasturbolader im Personenkraftfahrzeugbereich sehr vorteilhaft einsetzen.

Die Erfindung eignet sich insbesondere im Motorbremsbetrieb des Abgasturboladers. Im Motorbremsbetrieb wird angestrebt, den radialen Strömungseintrittsquerschnitt so weit wie möglich zu reduzieren, d.h. das radiale Leitgitter zu schließen. Um aber die radialen Leitschaufeln verstellen zu können, ist ein minimaler Spalt an den axialen Stirnseiten der radialen Leitschaufeln erforderlich. Zur Verstellung der radialen Leitschaufeln kann der verstellbare Ausgleichsring axial in eine vom radialen Leitgitter weiter entfernten Position verschoben werden. Anschließend wird zur Schließung von Luftspalten dieser Ausgleichsring bis auf den Kontakt zur Stirnseite der Leitschaufeln bzw. eines sonstigen Bauteils herangeschoben. Im Motorbremsbetrieb sind die miteinander in Kontakt kommenden Teile der Leitschaufeln und des Strömungs- bzw. Ausgleichrings aber einem verstärkten Verschleiß unterworfen. Durch den erfindungsgemäßen, sehr klein dimensionierten Ausgleichsring kann dieser Verschleiß auf ein Mindestmaß reduziert werden.

Vorteilhafte Ausgestaltungen und Weiterbildungen der Erfindung sind den Unteransprüchen sowie der Beschreibung unter Bezugnahme auf die Zeichnung entnehmbar.

In einer bevorzugten Ausgestaltung ist der Ausgleichsring in einer Ausnehmung des Strömungsringes angeordnet. Die Ausnehmung fungiert somit gewissermaßen als Führungsteil bei einer axialen Bewegung des Ausgleichsrings. Außerdem ist diese Anordnung sehr platzsparend.

In einer sehr zweckmäßigen Ausgestaltung weist der Ausgleichsring zumindest einen Kolbenring auf, über den der Ausgleichsring gegen den Strömungsring abgedichtet wird. Es wird somit verhindert, dass im Betrieb des Abgasturboladers unerwünschterweise Abgas durch die Spalten zwischen Ausgleichsring und Strömungsring in das Gehäuseinnere des Abgasturboladers gelangen kann, was zu Fehlluftströmen führen würde. Vorteilhafterweise sind dabei die Kolbenringe an einem Innendurchmesser und/oder an einem Außendurchmesser des Ausgleichsrings angeordnet, jedoch wäre es selbstverständlich auch denkbar, dass die Kolbenringe an einer Position des Strömungsringes angebracht sind, die dem Ausgleichsring gegenüberliegen. Wesentlich dabei ist lediglich, dass die Kolbenringe den Ausgleichsring und den Strömungsring gegeneinander abdichten. In einer bevorzugten Ausgestaltung sind dabei die Kolbenringe in eigens vorgesehenen Nuten innerhalb des Ausgleichsrings und/oder des Strömungsrings eingebettet, wodurch ein Verrutschen der Kolbenringe vermieden wird und somit eine Fixierung der Kolbenringe ermöglicht wird.

In einer sehr zweckmäßigen Ausgestaltung ist eine axiale Beweglichkeit des Strömungsringes durch mindestens einen Anschlag vorgegeben. Vorteilhafterweise sind dabei zumindest zwei Anschläge vorgesehen, das heißt jeweils einen Anschlag in eine Bewegungsrichtung des Ausgleichsrings.

Ein erster Anschlag wird vorteilhafterweise durch eine Ausnehmung im Strömungsring gebildet, die somit eine Bewegung des Ausgleichrings entgegen der Richtung des Leitgitters begrenzt. Dieser erste Anschlag kann durch eine Stufe im Wandbereich des Strömungsrings gebildet sein. An diese Stufe schlägt die entsprechende Fläche des Ausgleichrings im Falle einer dahin gerichteten axialen Bewegung an. Denkbar wären selbstverständlich auch andere Anschläge, beispielsweise Distanzhülsen oder Federn.

Ein zweiter Anschlag wird typischerweise durch die Stirnflächen der Schaufeln des Leitgitters gebildet, wodurch eine axiale Bewegung des Ausgleichrings in die Richtung des Leitgitters begrenzt wird. Bei dieser Ausgestaltung liegen im Betrieb Ausgleichsring und Leitschaufeln dicht aneinander an, so dass keinerlei Spalt zwischen Ausgleichsring und Leitgitter vorhanden ist. Dadurch werden Fehlluftströme durch das Leitgitter weitestgehend vermieden. Da diese Form naturgemäß mit einem Verschleiß von Ausgleichsring und/oder Leitgitterschaufeln einhergehen, wäre es auch denkbar, als Anschlag Distanzhülsen oder ähnliches zu verwenden. Diese Distanzhülsen sollten idealerweise lediglich geringfügig über die Breite der Leitschaufeln überstehen. Diese Form des Anschlags bewirkt zwar abhängig von den Ausmaßen der Distanzhülsen einen mehr oder weniger großen Spalt zwischen Leitgitter und Ausgleichsring und damit einhergehend mehr oder weniger große Fehlluftströme durch diesen Spalt. Allerdings wird durch diese Maßnahme der Verschleiß der genannten Elemente weitestgehend reduziert, wodurch deren Lebensdauer signifikant vergrößert wird.

Im Falle eines axial verschiebbaren Ausgleichringes wird insbesondere die Öffnung eines Spalts zwischen Leitgitter und Ausgleichsring auf ein vorgegebenes Maß begrenzt. Ein vergleichsweise geringes Maß soll sicherstellen, dass in einem Störungsfall, beispielsweise bei einem Ausfall eines den Ausgleichsring verstellenden Stellelements, das maximale Spiel des Ausgleichsrings auf eben ein Maß begrenzt wird, welches trotzdem ein Funktionieren des Abgasturboladers sowohl im Motorbremsbetrieb als auch in der befeuerten Antriebsbetriebsweise sicherstellt.

Der Ausgleichsring weist erfindungsgemäß einen geringeren Außendurchmesser und/oder einen größeren Innendurchmesser als der Strömungsring auf. Darüber hinaus ist es sehr zweckmäßig, wenn der Ausgleichsring auch eine gegenüber dem Strömungsring sehr viel geringere Masse aufweist. Diese Idee der vorliegenden Erfindung besteht in der grundlegenden Erkenntnis, dass ein hinsichtlich der Ausmaße und der Masse geringer dimensionierter Ausgleichsring sehr viel einfacher und präziser axial verstellbar ist. Speziell bei sehr großen Turboladern, wie sie beispielsweise bei Nutzfahrzeugen zum Einsatz kommen, lässt sich damit der im Vergleich zum Strömungsring sehr viel kleinere und leichtere Ausgleichsring sehr einfach axial gegen das Leitgitter verstellen, ohne dass dafür eine verhältnismäßig große Kraft bzw. ein großer Druck aufgewendet werden müsste. Darüber hinaus ist es bei kleinen bzw. leichten Teilen erfahrungsgemäß einfacher, diese gegenüber dem umliegenden Gehäuse abzudichten.

Zur axialen Verstellung des Ausgleichsrings und/oder des Strömungsrings ist erfindungsgemäß eine Verstelleinrichtung vorgesehen. Über diese Verstelleinrichtung ist eine pneumatische und/oder hydraulische axiale Verstellung möglich.

Die Verstelleinrichtung weist vorteilhafterweise eine mit dem Ausgleichsring verbundene Rohrleitung auf, über die der Ausgleichsring mit einem Druck beaufschlagbar ist. Statt der Verwendung einer Rohrleitung wäre auch eine Hohlschraube, die im Ausgleichsring eingeschraubt ist, denkbar. Die axiale Bewegung des Ausgleichsrings erfolgt durch Druckbeaufschlagung, wobei der dafür erforderliche Gas- oder Hydraulikdruck durch eine interne und/oder externe Druckversorgungseinrichtung bereitgestellt wird.

Im Falle einer internen Druckversorgungseinrichtung kann der zur axialen Verstellung erforderliche Druck beispielsweise aus dem Abgas im Strömungskanal abgeleitet werden. Über eine Verbindungsrohrleitung bzw. über eine Hohlschraube kann dieser interne Druck dem Ausgleichsring zugeführt werden.

Vorteilhafterweise wird dabei die axiale Verstellung des Ausgleichsrings selbstregelnd über den internen Gasdruck ausgeführt. Dabei ist lediglich auf die Dimensionierung der Verbindungsrohrleitung bzw. der Hohlschraube, insbesondere dabei deren Querschnitte, die für die Bemessung der Höhe des internen Gasdruckes verantwortlich sind, zu achten.

Ein externer Druck kann beispielsweise über eine extern am Abgasturbolader angeordnete Druckversorgungseinrichtung 30, zum Beispiel ein Kompressor 30, bereitgestellt werden. Der Kompressor 30 erzeugt den externen Druck, der über Verbindungsrohrleitungen und/oder eine Hohlschraube dem Ausgleichsring zugeführt wird. Bei dieser Form der Druckbeaufschlagung sind allerdings hohe Anforderungen an die Dichtigkeit der Druckversorgungseinrichtung 30 (Leckage-Problem) zu stellen.

In einer typischen Ausgestaltung ist eine Steuereinrichtung vorgesehen, mittels der die Höhe des internen und/oder des externen Gasdrucks in Abhängigkeit von der Motorleistung und/oder von der gewünschten Motorbremsleistung und/oder des Abstandes zwischen Leitgitter und Ausgleichsring gesteuert wird.

Der Strömungsring ist in einer bevorzugten Ausgestaltung Bestandteil des Gehäuses bzw. ist fest mit dem Gehäuse verbunden. Im letzteren Fall ist der Strömungsring dabei mit Befestigungsmitteln, zum Beispiel Verschraubungen, direkt mit dem Gehäuse des Turboladers verbunden.

Vorteilhafterweise ist ein Schaufellagerring vorgesehen, an dem die Leitschaufeln des Leitgitters gelagert sind, wobei der Schaufellagerring nicht an dem Strömungsring und/oder am Ausgleichsring befestigt ist.

In einer sehr vorteilhaften Ausgestaltung sind die Schaufeln des Leitgitters beweglich ausgebildet und dabei einseitig am Schaufellagerring gelagert. Die Schaufeln des Leitgitters berühren für den Fall, dass kein Spalt zwischen Leitgitter und Ausgleichsring vorhanden ist, lediglich den dem Ausgleichsring, nicht aber den Strömungsring.

In einer sehr vorteilhaften Ausgestaltung ist neben dem radialen Strömungseintrittsquerschnitt auch ein halbaxialer Strömungseintrittsquerschnitt möglich, wobei dann der Strömungsring die Querschnitte des radialen und des halbaxialen Strömungseintrittsquerschnitts begrenzt.

Die Erfindung wird nachfolgend anhand der in den Figuren der Zeichnung angegebenen Ausführungsbeispiele näher erläutert. Es zeigt dabei:
- Figur 1: in einer Schnittdarstellung ein erstes Ausführungsbeispiel eines erfindungsgemäßen Abgasturboladers für eine Brennkraftmaschine, dessen Abgasturbine im radialen Zuströmbereich mit einer variablen Turbinengeometrie ausgestattet ist und erfindungsgemäß einen axial verstellbaren Ausgleichsring aufweist;
- Figur 2: eine Schnittdarstellung des den erfindungsgemäßen Ausgleichsring enthaltenden Turbinenbereichs;
- Figur 3: ein zweites Ausführungsbeispiel eines erfindungsgemäßen Abgasturboladers mit Ausgleichsring;
- Figur 4: ein drittes Ausführungsbeispiel eines erfindungsgemäßen Abgasturboladers mit Ausgleichsring;
- Figur 5: ein viertes Ausführungsbeispiel eines erfindungsgemäßen Abgasturboladers mit Ausgleichsring.

In allen Figuren der Zeichnung sind gleiche bzw. funktionsgleiche Elemente und Teile - sofern nichts anderes angegeben ist - mit gleichen Bezugszeichen versehen.

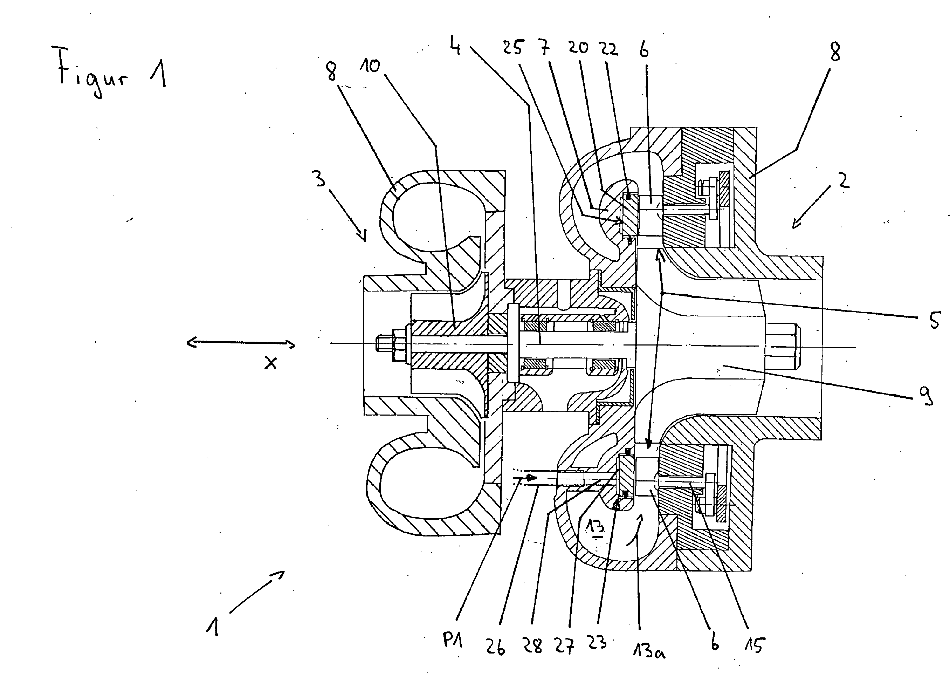

In Figur 1 ist mit Bezugszeichen 1 ein Abgasturbolader für eine Brennkraftmaschine bezeichnet. Die in Figur 1 nicht dargestellte Brennkraftmaschine kann beispielsweise eine Dieselbrennkraftmaschine oder ein Ottomotor für ein Nutzfahrzeug oder einen PKW sein.

Der Abgasturbolader 1 enthält ein Gehäuse 8. Im Gehäuse 8 des Abgasturbolader 1 ist eine Abgasturbine 2, die als Radialturbine ausgeführt ist, sowie einen Verdichter 3 angeordnet. Das Turbinenrad 9 der Radialturbine 2 ist über eine gemeinsame Welle 4 drehfest mit einem Verdichterrad 10 des Verdichters 3 gekoppelt. Das Verdichterrad 10 ist in einem Gehäuse des Verdichters 3, das Turbinenrad 9 in einem Gehäuse für die Turbine 2 angeordnet. Das Turbinenrad 9, das von unter Überdruck stehenden Abgasen in der Brennkraftmaschine angetrieben wird, treibt über die gemeinsame Welle 4 seinerseits das Verdichterrad 10 des Abgasturboladers an. Im Betrieb der Brennkraftmaschine wird Abgas des Motors in einen Zuströmkanal 13 der Radialturbine 2 geleitet und dem Turbinenrad 9 zugeführt. Dessen Drehbewegung wird über die gemeinsame Welle 4 auf das Verdichterrad 10 übertragen, woraufhin im Verdichter 3 angesaugte Ladeluft auf einen erhöhten Ladedruck verdichtet und dem Zylindereinlass des Motors zugeführt wird.

Weiterhin umfasst die Turbine 2 einen Strömungskanal 13, der das Turbinenrad 9 radial einschließt. Der Strömungskanal 13 weist im Bereich des Turbinenrades 9 damit einen radialen Strömungseintrittsquerschnitt 13a auf, in dem ein radiales Leitgitter 5 mit verstellbaren Leitschaufeln 6 angeordnet ist. Durch dieses verstellbare Leitgitter 5 erhält die Turbine 2 eine variable Turbinengeometrie.

Nachfolgend wird eine bevorzugte Betriebsweise der Turbine mit variabler Turbinengeometrie anhand eines Beispiels kurz erläutert. Je nach Betriebsweise der Brennkraftmaschine kann die variable Turbinengeometrie des Leitgitters 5 durch ein ihr zugeordnetes Stellelement in ihrer jeweiligen Position verstellt werden, wodurch der radiale Strömungseintrittsquerschnitt 13a verändert wird.

In einem bevorzugten Ausführungsbeispiel kann vorgesehen sein, dass in der befeuerten Antriebsweise die Leitschaufeln 6 das radiale Leitgitter 5 in eine Öffnungsstellung versetzen, um einen größtmöglichen Abgasmassenstrom durch die Turbine 2 zu ermöglichen und damit einhergehend eine hohe Laderleistung zu erzeugen. Im Motorbremsbetrieb wird zur Erzeugung einer hohen Motorbremsleistung hingegen das radiale Leitgitter 5 durch eine entsprechende Verstellung der Leitschaufeln 6 in eine Staustellung mit deutlich reduziertem Querschnitt, vorteilhafterweise mit einem auf null reduzierten radialen Strömungseintrittsquerschnitt 13a, verstellt. Das über den Strömungskanal 13 vom Abgasauslass der Brennkraftmaschine zugeführte Abgas ist nunmehr gezwungen, größtenteils bzw. vollständig über den halbaxialen Strömungseintrittsquerschnitt 13b und dem dort angeordneten halbaxialen Leitgitter 14 auf das Turbinenrad 2 einzuströmen. Auf Grund des gegenüber der befeuerten Betriebsweise reduzierten Strömungsgesamteintrittsquerschnitts baut sich im Abgasstrang im Bereich zwischen Turbine und Motor ein erhöhter Abgasgegendruck auf. Dieser Abgasgegendruck bewirkt, dass das Abgas mit hoher Geschwindigkeit durch die Kanäle zwischen den Leitschaufeln strömt und das Turbinenrad so mit einem hohen Impuls beaufschlagt wird. Durch die erhöhte Laderleistung wird auch die dem Motor zugeführte Verbrennungsluft unter einen erhöhten Ladedruck gesetzt. Der Zylinder wird ladeluftseitig mit einem erhöhten Ladedruck beaufschlagt. Zugleich liegt aber an der Abgasseite ein erhöhter Abgasgegendruck an, der einem Abblasen des im Zylinder verbliebenen, verdichteten Abgases über Bremsventile in den Abgasstrang hinein entgegenwirkt. In diesem Motorbremsbetrieb muss der Kolben Kompressionsarbeit gegen einen Überdruck im Abgasstrang verrichten, dass heißt die in den Zylindern verdichtete Luft muss gegen den erhöhten Abgasgegendruck in den Abgasstrang ausgeschoben werden, woraus die gewünschte zusätzliche Bremsleistung resultiert.

Die verstellbaren Leitschaufeln 6 des radialen Leitgitters 5 sind an Wellen 15 drehbar gelagert. Im Ausführungsbeispiel in Figur 1 sind die Wellen 15 lediglich einseitig gelagert und zwar im Bereich des Leitschaufelringes, in dem die Leitschaufeln des Leitgitters angeordnet sind. Denkbar wäre selbstverständlich auch eine zweiseitige Lagerung, bei dem die Wellen 15 der Leitschaufeln 6 sowohl im Leitschaufelring als auch im Strömungsring gelagert sind.

Im Strömungskanal 13 der Turbine 1 ist ein Strömungsring 7 angeordnet, der den radialen Strömungseintrittsquerschnitt 13a begrenzt.

Erfindungsgemäß ist nun ein Ausgleichsring 20 vorgesehen. Der Ausgleichsring ist in einer eigens dafür vorgesehenen Ausnehmung des Strömungsrings 7 angeordnet. Über eine Dichtvorrichtung 22 ist der Ausgleichsring 20 gegen die Ausnehmung 21 und damit gegen den Strömungsring 7 abgedichtet. Diese Dichtvorrichtung 22 besteht im vorliegenden Ausführungsbeispiel aus zwei Kolbenringen 22 die an einem Innendurchmesser und an einem Außendurchmesser des Ausgleichsringes 20 angeordnet sind. Diese Kolbenringe 22 stellen im Betrieb idealerweise eine dichte Verbindung zwischen Ausgleichsring 20 und Strömungsring 7 her, so dass stets sichergestellt ist, dass nur wenig Abgas in den Bereich zwischen Strömungsring 7 und Ausgleichsring 20 gelangen kann.

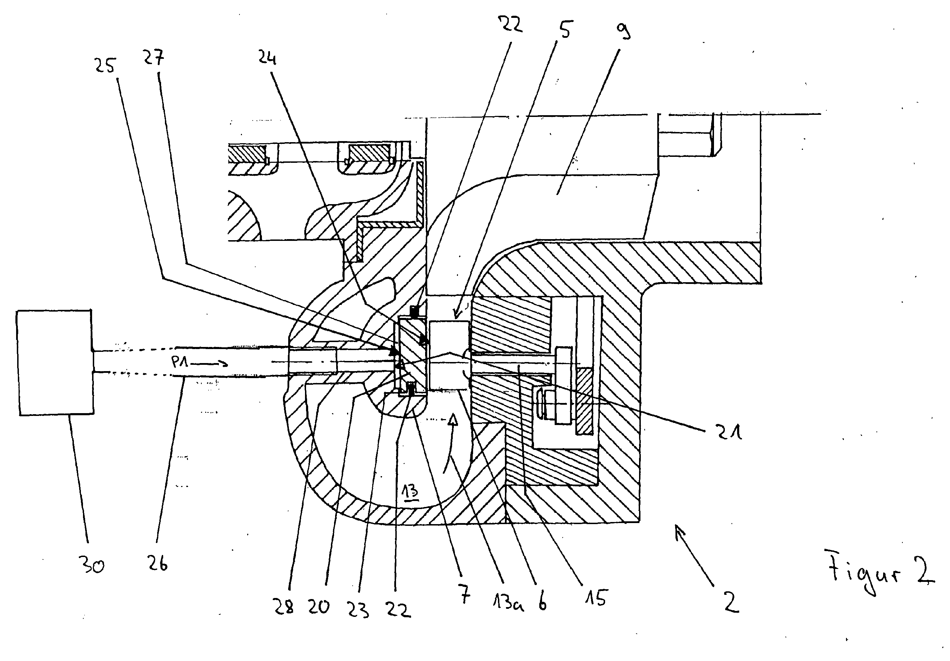

Figur 2 zeigt in einer vergrößerten Darstellung die Anordnung des erfindungsgemäßen Ausgleichsrings 20 innerhalb des Strömungsrings 7 bzw. der Turbine 2.

Erfindungsgemäß ist der Ausgleichsring 20 in Axialrichtung X beweglich ausgebildet. Dies bedeutet, dass der Ausgleichsring 20 in axialer Richtung X der Turbine 2, d.h. in Richtung des Leitgitters 5, hin und zurück verschiebbar ausgebildet ist.

Der Ausgleichsring 20 ist in axialer Richtung X und innerhalb der Ausnehmung 21 jedoch nicht frei bewegbar. Vielmehr wird eine axiale Bewegung des Ausgleichsrings 20 durch feste oder weitestgehend feste Anschläge 23, 24 begrenzt. Auf der Seite des Strömungsrings 7 ist ein solcher Anschlag 23 in der Ausnehmung 21 des Strömungsrings 7 vorgesehen. Der Anschlag 23 ist hier als Stufe in der Gehäusewand des Strömungsrings 7 ausgebildet. Auf der Seite des Leitgitters 5 bildet die stirnseitige Fläche der Leitschaufeln 6 jeweils den gegenüberliegenden Anschlag 24. Durch die beiden Anschläge 23, 24 wird somit eine definierte axiale Bewegung des Ausgleichsrings 20 vorgegeben.

Im vorliegenden Ausführungsbeispiel liegt der Ausgleichsring 20 axial dicht an der Stirnseite des den zweiten Anschlag 24 bildenden radialen Leitgitters 5 an, so dass kein Spalt zwischen Leitgitter 5 und Ausgleichsring 20 ausgebildet ist. Dadurch können radiale Fehlluftströme weitestgehend verhindert werden.

Statt der Verwendung der Leitschaufeln 6 als Anschlag 24 können auch Distanzhülsen vorgesehen sein, welche eine axiale Verschiebung des Ausgleichsrings 20 in Richtung des radialen Leitgitters 5 begrenzen. Die Verwendung von Distanzhülsen als Anschlag ist in den Ausführungsbeispielen nicht dargestellt.

Die radiale Verstellung des Ausgleichsrings 20 erfolgt über einen Gasdruck P1, der der dem Leitgitter 5 abgewandten Stirnfläche 25 des Ausgleichsrings 20 beaufschlagt wird. Der Gasdruck P1 wird über eine externe, in den Figuren 1 und 2 nicht näher dargestellte Druckversorgungseinrichtung bereitgestellt und über eine Rohrleitung 26 in die Kammer 27 zwischen Ausgleichsring 20 und Strömungsring 7 geleitet. Die Rohrleitung 26 ist im vorliegenden Ausführungsbeispiel Bestandteil des Gehäuses 8 sowie des Strömungsrings 7. Jedoch wäre es auch denkbar, hier eine eigens dafür vorgesehene Verbindungsrohrleitung zu verwenden. Die Rohrleitung 26 kann selbstverständlich auch als Hohlschraube ausgebildet sein, die über eine geeignete Verschraubung mit dem Gehäuse bzw. dem Strömungsring 7 verbunden ist. Über die Rohrleitung 26 wird also die Fläche 25 mit einem extern bereitgestellten Gasdruck P1 beaufschlagt. Durch geeignete Wahl des Gasdruckes P1 lässt sich damit der Ausgleichsring 20 in axialer Richtung X bedarfsgemäß verstellen.

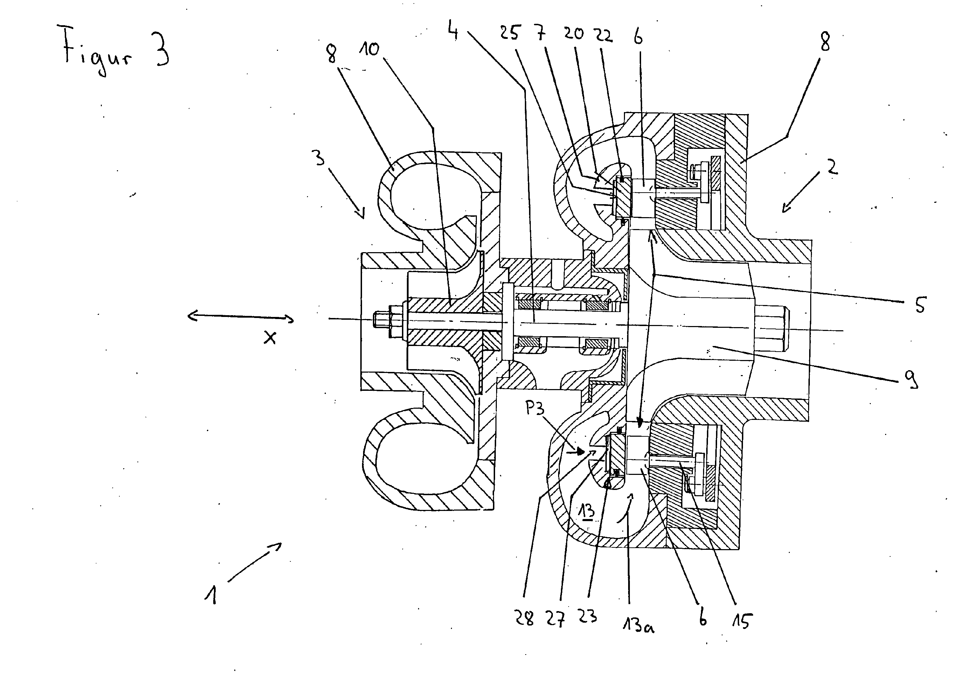

Im Unterschied zu Figur 1 wird im Ausführungsbeispiel in Figur 3 der Ausgleichsring 20 mit einem intern bereitgestellten Gasdruck P3 beaufschlagt. Hier ist keine Rohrleitung 26 vorgesehen, jedoch weist der Strömungsring 7 eine Bohrung auf, über die der Strömungskanal 13 mit der Kammer 27 und somit der Fläche 25 des Ausgleichsrings 20 verbunden ist. Die Fläche 25 wird mit dem internen Gasdruck P3 beaufschlagt. Der interne Gasdruck P3 resultiert aber aus dem Druck P3, der sich aus dem Abgasstrom im Strömungskanal 13 ergibt. Ist dieser Druck P3 sehr groß, dann wird der Ausgleichsring 20 stärker in axialer Richtung X verschoben, während er bei einem geringen Druck P3 weniger in axialer Richtung X verschoben wird. Es wird damit mithin eine selbstregelnde Verschiebung des Ausgleichsrings 20 innerhalb des Strömungsrings 7 bereitgestellt. Dabei ist lediglich der Durchmesser der Bohrung 28 innerhalb des Strömungsrings 7 geeignet zu wählen.

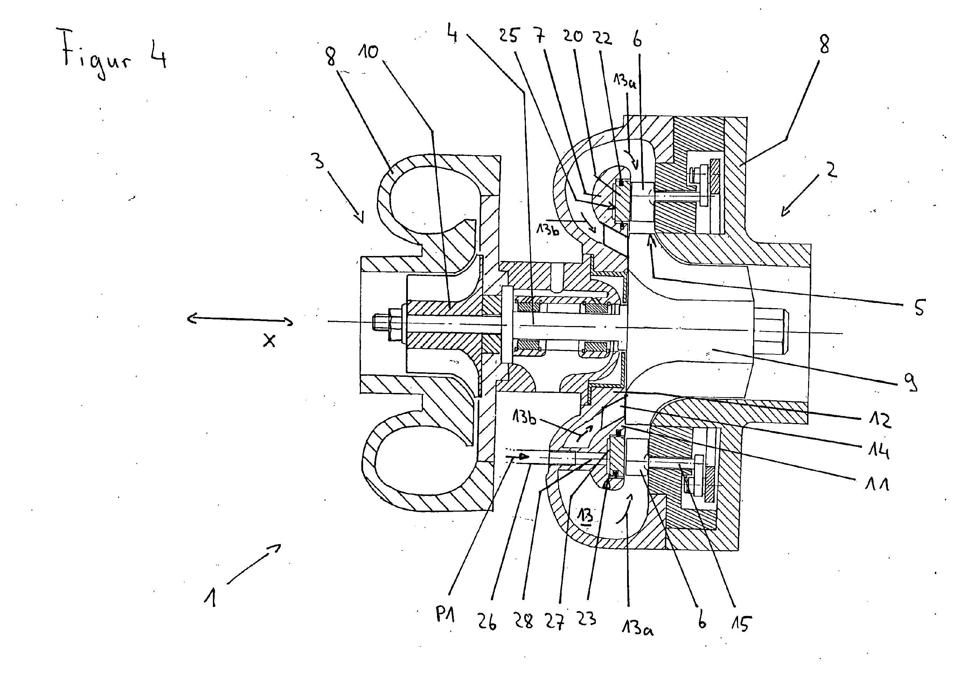

Im Unterschied zum Ausführungsbeispiel in Figur 1 enthält der Abgasturbolader 1 bzw. die Turbine 2 in Figur 4 einen Strömungskanal 13, der das Turbinenrad 9 sowohl radial als auch halbaxial einschließt. Der Strömungsring 7 umfasst einen Außenring 11 und einen Innenring 12. Der Strömungskanal 13 weist im Bereich des Turbinenrades 9 also einen radialen Strömungseintrittsquerschnitt 13a sowie einen halbaxialen Strömungseintrittsquerschnitt 13b auf. Zwischen Außenring 11 und Innenring 12 ist hier das halbaxiale Leitgitter 14 mit feststehenden Leitschaufeln starr auf dem Strömungsring 7 angeordnet.

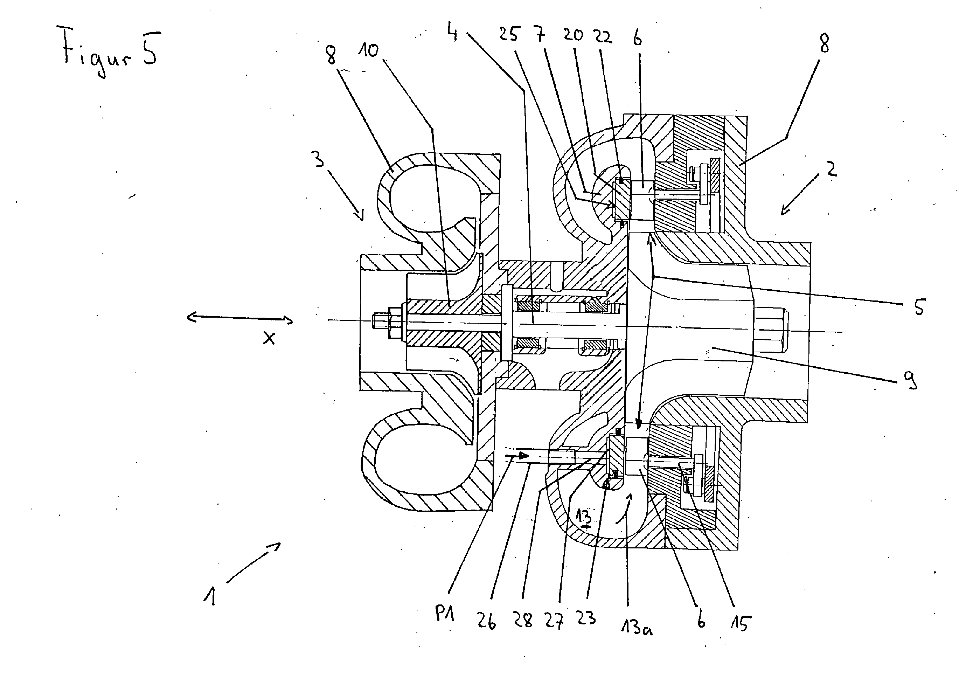

Im Unterschied zu Figur 1 ist der Strömungsring 7 im Ausführungsbeispiel in Figur 5 Bestandteil des Gehäuses 8, dass heißt es existiert hier keinerlei Spalt zwischen Gehäuse 8 und Strömungsring 7.

Es kann auch vorteilhaft sein, in bestimmten Betriebszuständen der Brennkraftmaschine im Motorbremsbetrieb und/oder in der befeuerten Antriebsbetriebsweise ein erwünschtes Spaltmaß vorzusehen, mit dem die Strömungs- und Druckverhältnisse innerhalb des Ladergehäuses in der Turbine in einer bestimmten Weise gezielt beeinflusst werden. Außerdem kann es zweckmäßig sein, zusätzliche Kriterien für die Verstellung des Ausgleichsrings 20 vorzusehen, beispielsweise derart, dass der Strömungseintrittsquerschnitt 13a, 13b für die radiale und/oder die halbaxiale Zuströmung ein Maximum nie überschreiten darf.

Der Ausgleichsring 20 ist - wie bereits erwähnt - axial verschiebbar ausgebildet, wodurch insbesondere Leitschaufelspalten am radialen Leitgitter 5 reduziert werden können. Alternativ oder zusätzlich kann es aber auch zweckmäßig sein, eine radiale Verstellbarkeit des Ausgleichsrings 20 vorzusehen, die beispielsweise durch eine exzentrische Verschiebung des Ausgleichsringes 20 erzielt werden kann. Neben der axialen Verschiebbarkeit des Ausgleichsringes 20 kann es bei bestimmten Anwendungen auch zweckmäßig sein, zusätzlich den Strömungsring 7 axial und/oder radial zu verschieben.

Zusammenfassend kann festgestellt werden, dass durch den wie oben beschrieben ausgestalteten Turbolader auf sehr einfache, jedoch nichts desto Trotz sehr effektive Weise ein höherer Wirkungsgrad sowie ein geringerer Verschleiß der Abgasturbine als bei Lösungen gemäß dem Stand der Technik erzielbar ist, ohne dass eine konstruktiv aufwendige, teuere Lösung in Kauf genommen werden müsste.

Die vorliegende Erfindung wurde anhand der vorstehenden Beschreibung so dargestellt, um das Prinzip der Erfindung und dessen praktische Anwendung bestmöglichst zu erklären, jedoch lässt sich die erfindungsgemäße Anordnung bei geeigneter Abwandlung selbstverständlich in mannigfaltigen anderen Ausführungsformen realisieren.

### Bezugszeichenliste

- 1: Abgasturbolader
- 2: Turbine, Radialturbine
- 3: Verdichter
- 4: gemeinsame Welle
- 5: (radiales) Leitgitter
- 6: Leitschaufeln
- 7: Strömungsring
- 8: Gehäuse
- 9: Turbinenrad
- 10: Verdichterrad
- 11: Außenring
- 12: Innenring
- 13: Strömungskanal
- 13a: radialer Strömungseintrittsquerschnitt
- 13b: halbaxialer Strömungseintrittsquerschnitt
- 14: halbaxiales Leitgitter
- 15: Wellenlagerung des radialen Leitgitters
- 20: Ausgleichsring
- 21: Ausnehmung
- 22: Dichtvorrichtung, Kolbenring
- 23: Anschläge
- 24: Anschläge
- 25: Stirnfläche des Ausgleichsrings
- 26: Rohrleitung
- 27: Kammer
- 28: Hohlschraube, Bohrung
- 30: externe Druckversorgungseinrichtung, Kompressor

- X: axiale Richtung
- P1: externer Druck
- P3: interner Druck

## Patentansprüche

1. Abgasturbolader für eine Brennkraftmaschine,
mit mindestens einer abgasseitig der Brennkraftmaschine nachgeschaltet angeordneten Turbine,
wobei die Turbine (2) einen Strömungskanal (13) mit zumindest einem radialen Strömungsquerschnitt (13a) aufweist,
mit einem den radialen Strömungsquerschnitt (13a) begrenzenden Strömungsring (7),
wobei zur veränderlichen Einstellung des radialen Strömungsquerschnitts (13a) in diesem Bereich ein veränderliches Leitgitter (5) vorgesehen ist,
**dadurch gekennzeichnet,**
**dass** ein Ausgleichsring (20) vorgesehen ist, der axial und in Richtung des Leitgitters (5) verstellbar ausgebildet ist.

2. Abgasturbolader nach Anspruch 1,
**dadurch gekennzeichnet,**
**dass** der Ausgleichsring (20) in einer Ausnehmung (21) des Strömungsringes (7) angeordnet ist.

3. Abgasturbolader nach einem der vorstehenden Ansprüche,
**dadurch gekennzeichnet,**
**dass** mindestens ein Kolbenring (22) vorgesehen ist, der an einem Innendurchmesser und/oder an einem Außendurchmesser des Ausgleichsring (20) angeordnet ist und über die der Ausgleichsring (20) gegen den Strömungsring (7) abgedichtet ist.

4. Abgasturbolader nach einem der vorstehenden Ansprüche,
**dadurch gekennzeichnet,**
**dass** die axiale Beweglichkeit des Strömungsringes (7) durch mindestens einen Anschlag (23, 24) vorgegeben ist.

5. Abgasturbolader nach Anspruch 4,
**dadurch gekennzeichnet,**
**dass** ein erster Anschlag (23, 24) durch eine Ausnehmung (21) im Strömungsring (7) gebildet ist, wodurch eine Bewegung des Ausgleichsringes (20) in eine erste Richtung vorgegeben ist.

6. Abgasturbolader nach einem der Ansprüche 4 oder 5,
**dadurch gekennzeichnet,**
**dass** ein zweiter Anschlag (23, 24) durch Stirnflächen des Leitgitters (5) gebildet ist, wodurch eine Bewegung des Ausgleichsringes (20) in eine zweite, zur ersten entgegengesetzten Richtung vorgegeben ist.

7. Abgasturbolader nach einem der vorstehenden Ansprüche,
**dadurch gekennzeichnet,**
**dass** zwischen dem Leitgitter (5) und dem Ausgleichsring (20) ein Abstand vorhanden ist, der bei maximaler Verstellung des Ausgleichsring (20) im Bereich weniger zehntel Millimeter liegt.

8. Abgasturbolader nach einem der vorstehenden Ansprüche,
**dadurch gekennzeichnet,**
**dass** der Ausgleichsring (20) einen geringeren Außendurchmesser und/oder einen größeren Innendurchmesser und/oder eine geringere Masse als der Strömungsring (7) aufweist.

9. Abgasturbolader nach einem der vorstehenden Ansprüche,
**dadurch gekennzeichnet,**
**dass** eine Verstelleinrichtung (26, 27, 28) vorgesehen ist, über die der Ausgleichsring (20) und/oder der Strömungsring (7) pneumatisch oder hydraulisch axial verstellbar sind.

10. Abgasturbolader nach Anspruch 9,
**dadurch gekennzeichnet,**
**dass** die Verstelleinrichtung (26, 28) eine mit dem Ausgleichsring (20) verbundene Rohrleitung (26) und/oder Hohlschraube (28) aufweist, über die der Ausgleichsring (20) mit einem Druck (P1, P3) beaufschlagbar ist.

11. Abgasturbolader nach einem der vorstehenden Ansprüche,
**dadurch gekennzeichnet,**
**dass** eine interne Druckversorgungseinrichtung vorgesehen ist, die aus dem Abgasstrom im Strömungskanal (13) einen internen Gasdruck (P3) bereitstellt, der insbesondere über eine Rohrleitung (26) und/oder eine Hohlschraube (28) dem Ausgleichsring (20) zugeführt wird.

12. Abgasturbolader nach Anspruch 11,
**dadurch gekennzeichnet,**
**dass** die Bemessung der Höhe des internen Gasdruck (P3) selbstregelnd aus dem Abgasstrom im Strömungskanal (13) erfolgt.

13. Abgasturbolader nach einem der vorstehenden Ansprüche,
**dadurch gekennzeichnet,**
**dass** eine externe, am Abgasturbolader (1) angeordneten Druckversorgungseinrichtung (26, 28, 30) vorgesehen ist, die einen externen Gasdruck (P1) bereitstellt, der zumindest teilweise über eine Rohrleitung (26) und/oder eine Hohlschraube (28) dem Ausgleichsring (20) zuführbar ist.

14. Abgasturbolader nach einem der Ansprüche 11 bis 13,
**dadurch gekennzeichnet,**
**dass** eine Steuereinrichtung vorgesehen ist, mittels der die Höhe des Gasdruck (P1, P3) in Abhängigkeit von der Motorleistung und/oder von der gewünschten Motorbremsleistung und/oder des Abstandes zwischen Leitgitter (5) und Ausgleichsring (20) gesteuert wird.

15. Abgasturbolader nach einem der vorstehenden Ansprüche,
**dadurch gekennzeichnet,**
**dass** der Ausgleichsring (20) fest mit dem Strömungsring (7) gekoppelt ist oder Bestandteil des Strömungsrings (7) ist.

16. Abgasturbolader nach einem der vorstehenden Ansprüche,
**dadurch gekennzeichnet,**
**dass** der Strömungsring (7) Bestandteil des Gehäuses des Abgasturboladers (1) ist.

17. Abgasturbolader nach einem der vorstehenden Ansprüche,
**dadurch gekennzeichnet,**
**dass** der Strömungsring (7) mittels Befestigungsmitteln, insbesondere mittels Verschraubungen, direkt mit dem Gehäuse des Abgasturboladers (1) verbunden ist.

18. Abgasturbolader nach einem der vorstehenden Ansprüche,
**dadurch gekennzeichnet,**
**dass** ein Schaufellagerring vorgesehen ist, an dem die Leitschaufeln (6) des Leitgitters (5) gelagert sind, wobei der Schaufellagerring (6) nicht an dem Strömungsring (7) und/oder am Ausgleichsring (20) befestigt ist.

19. Abgasturbolader nach einem der vorstehenden Ansprüche,
**dadurch gekennzeichnet,**
**dass** die beweglich ausgebildeten Leitschaufeln (6) des Leitgitters (5) einseitig am Schaufellagerring gelagert sind und lediglich den Ausgleichsring (20), nicht aber mit dem Strömungsring (7) berühren.

20. Abgasturbolader nach einem der vorstehenden Ansprüche,
**dadurch gekennzeichnet,**
**dass** neben dem radialen Strömungsquerschnitt (13a) auch ein halbaxialer Strömungsquerschnitt (13b) vorgesehen ist, wobei der Strömungsring (7) die effektiven Querschnitte des radialen und des halbaxialen Strömungsquerschnitt (13a, 13b) begrenzt.
